Europäisches Patentamt

European Patent Office

Office européen des brevets

(19)

(11) Numéro de publication : **0 106 777**
**B1**

(12) **FASCICULE DE BREVET EUROPÉEN**

(45) Date de publication du fascicule du brevet :
21.01.87

(51) Int. Cl.⁴ : **G 01 P 13/02, G 01 P 15/00**

(21) Numéro de dépôt : **83460002.5**

(22) Date de dépôt : **03.10.83**

(54) Appareil de mesures de caractéristiques de la houle en mer.

(30) Priorité : **14.10.82 FR 8217584**

(43) Date de publication de la demande :
**25.04.84 Bulletin 84/17**

(45) Mention de la délivrance du brevet :
**21.01.87 Bulletin 87/04**

(84) Etats contractants désignés :
**BE DE GB IT NL SE**

(56) Documents cités :
**FR-A- 2 275 777**
**US-A- 3 383 915**
**US-A- 4 258 568**
**RADIO FERNSEHEN ELEKTRONIK, vol. 30, no. 8, août 1981, pages 525-528, Berlin, DD, A. KIEKBUSCH: "Einrichtungen zur Messung der Neigungswinkel eines Schiffes und der Wellenhöhe im natürlichen Seegang"**

(73) Titulaire : **Etablissement Public dit "Centre National d'Exploitation des Océans" (CNEXO)**
**66, Avenue d'Iéna**
**F-75116 Paris (FR)**

(72) Inventeur : **Hue, Jean-Pierre**
**135, rue Pierre Semard**
**F-29200 Brest (FR)**

(74) Mandataire : **Le Guen, Louis François**
**Cabinet Louis Le Guen 1, avenue Edouard VII B.P. 91**
**F-35802 Dinard Cédex (FR)**

Jouve, 18, rue St-Denis, 75001 Paris, France

**0 106 777**

## Description

La présente invention concerne un appareil de mesure de l'accélération verticale due à la houle, la pente de la surface libre de l'eau, et la direction de la houle.

La mesure de ces trois paramètres n'a d'existence que par rapport à un repère fixe dans l'espace qui peut être défini de la façon suivante :
— l'axe Oz est dirigé suivant la verticale ascendante du lieu, c'est à dire la direction du fil à plomb,
— l'axe Oy est dirigé vers le Nord magnétique, et
— l'axe Ox est dirigé vers l'Est magnétique.

On connaît des appareils de mesure des paramètres de la houle fonctionnant suivant deux principes différents. Dans un cas, l'ensemble de mesure est extérieur au milieu et, dans l'autre, il est inclus dans le milieu.

En ce qui concerne les appareils fonctionnant en dehors du milieu, trois études sont actuellement en cours. Dans le projet dit SEASAT, il est prévu l'émission à partir d'un satellite géostationnaire d'une impulsion radar et l'analyse de cette impulsion au retour pour en extraire l'amplitude et la direction de la houle. Un autre projet utilise un radar HF, avec émission d'une impulsion RADAR qui, après réflexion ionosphérique, est réfléchie par la surface de l'eau. La mesure et l'analyse de l'effet Doppler sur cette impulsion doivent permettre de déterminer l'amplitude et la direction de la houle. Dans un troisième projet, on utilise un radar direct, avec émission d'une impulsion RADAR vers la surface de l'eau. Après réflexion, cette impulsion est analysée et doit pouvoir permettre de déterminer l'amplitude et la direction de la houle.

Quand l'ensemble de mesure est inclus dans le milieu, il est logé dans une bouée, laquelle, directement soumise à la houle, possède trois degrés de liberté. Dans ce cas, il faut d'abord décider du référentiel dans lequel est effectuée la mesure. On peut envisager, soit l'asservissement du référentiel à la verticale, soit l'asservissement du référentiel à la surface.

L'asservissement à la verticale peut être réalisé par un équipage gyroscopique calé sur la verticale du lieu. Cette solution, qui a été la plus explorée et exploitée, aussi séduisante qu'elle puisse paraître, n'en est pas moins lourde et consommante. L'asservissement à la verticale peut également trouver une solution dans l'utilisation de la pesanteur. On connaît une bouée de houle sphérique qui fonctionne avec un accéléromètre monté sur un plateau circulaire lequel plateau se déplace dans une sphère. La référence extérieure y est l'accélération de la pesanteur $\vec{g}$ qui en tous points du globe terrestre est dirigée suivant la verticale. L'asservissement suivant la verticale est complètement dissocié de la mesure de l'accélération de la houle. Il faut donc que la fréquence d'oscillation propre de l'équipage mobile soit très inférieure à la bande de fréquence dans laquelle se situe le spectre de houle (0,1 s à 60 s). En pratique, la séparation mécanique entre la mesure et l'asservissement implique une taille de capteur importante, le remplissage de la sphère par un liquide, tel que par exemple de la glycérine, et de très bonnes caractéristiques mécaniques du fil supportant l'équipage mobile. Ce type d'asservissement ne permet la connaissance que du vecteur accélération verticale de la houle.

Le dispositif selon le document US-A-3 383 915 permet de déterminer l'accélération verticale due à la houle.

La présente invention a pour but de proposer un appareil de mesure fonctionnant avec asservissement du référentiel à la surface de la mer, cet appareil permettant d'appréhender les paramètres que sont l'accélération verticale due à la houle, la pente de la surface libre de l'eau, et la direction de la houle, tout en apportant des avantages par rapport aux matériels existants.

Quantitativement, on peut dire que les ensembles réalisant des mesures hors du milieu font appel à des techniques et à des matériels sophistiqués nécessitant la mise en place de moyens en personnel et en budget importants.

Pour ce qui est des mesures dans le milieu, les bouées à asservissement gyroscopiques sont généralement volumineuses, donc d'un emploi malaisé d'autant plus qu'elles nécessitent d'importantes réserves d'énergie. Le système utilisant la pesanteur, qui a été le plus largement utilisé durant les dernières années, présente cependant l'inconvénient de ne mettre en évidence que l'accélération verticale due à la houle.

La présente invention qui a pour but de prévoir une bouée de petites dimensions et de faible consommation permettant d'acquérir les paramètres : accélération verticale de la houle, pente de la houle, et direction de la houle, présente de l'intérêt, tant dans le domaine scientifique, en ce qui concerne l'étude du milieu marin et du phénomène de houle, que dans le domaine technique, en ce qui concerne la connaissance des sollicitations auxquelles sont soumis les ouvrages marins.

Suivant l'invention comme indiquée dans la revendication 1, il est prévu un appareil de mesures de caractéristiques de la houle en mer comprenant une bouée ayant une section plane qui reste parallèle à la surface libre de l'eau, un accéléromètre monté selon l'axe de la bouée, deux accéléromètres orthogonaux montés dans le plan principal de la bouée, et un magnétomètre triaxial dont les axes sont confondus avec ceux des accéléromètres.

La bouée supporte, outre les capteurs, la source d'énergie et le matériel électronique nécessaires au traitement, à l'enregistrement et/ou la transmission des informations relatives à la houle.

L'accélération due à la houle étant normale à la surface libre de l'eau, l'accéléromètre monté selon l'axe de la bouée mesure la somme de l'accélération due à la houle et la projection de l'accélération de la pesanteur $\overline{g}$ selon l'axe de la bouée.

Les deux accéléromètres orthogonaux montés dans le plan principal de la bouée mesurent les composantes de la projection du vecteur $\overline{g}$ dans la section plane de la bouée. Connaissant la valeur de $\overline{g}$ et les valeurs des composantes de $\overline{g}$ dans la section plane de la bouée, on en déduit la projection du vecteur $\overline{g}$ selon l'axe de la bouée, puis on déduit cette valeur de la valeur mesurée par le premier accéléromètre. Le résultat de la soustraction est la valeur de l'accélération due à la houle.

La valeur de la projection du vecteur $\overline{g}$ selon l'axe de la bouée permet de connaître l'inclinaison de cet axe par rapport à la verticale, ce qui donne directement la pente de la surface libre de l'eau. Connaissant la valeur de l'accélération due à la houle et son inclinaison par rapport à la verticale, on en déduit l'accélération verticale due à la houle.

Le magnétomètre permet de déterminer le vecteur champ magnétique terrestre par rapport à la bouée. La direction de la houle est définie comme l'angle de la projection horizontale du vecteur accélération due à la houle avec la projection horizontale du vecteur champ magnétique. Le plan horizontal est défini par rapport à la bouée par la connaissance du vecteur $\overline{g}$. Il est donc possible de déterminer la direction de la houle.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Figure 1   est une vue schématique en perspective d'un appareil suivant l'invention, comprenant une bouée,

la Figure 2   est un dessin géométrique destiné à illustrer le fonctionnement de l'appareil de mesure,

la Figure 3   est un schéma illustrant un aspect du fonctionnement de l'appareil de mesure, et

les Figures 4a à 4g  sont des organigrammes illustrant le fonctionnement du calculateur de l'appareil de mesure.

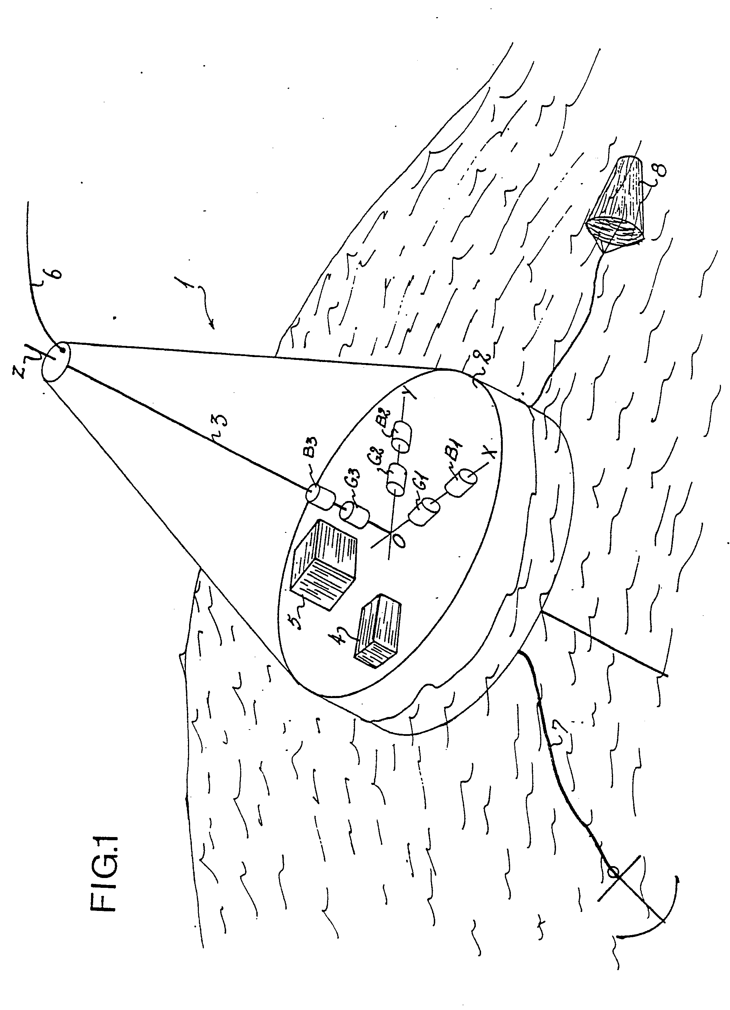

L'appareil de mesure, montré à la Fig. 1, comprend une bouée 1 laquelle est essentiellement constituée par un disque 2 portant un mât 3 orienté selon son axe de révolution. Sur le disque 2, sont montés trois accéléromètres orthogonaux G1, G2 et G3, trois magnétomètres B1, B2 et B3. L'accéléromètre G3 et le magnétomètre B3 sont orientés selon l'axe Oz du mât 3. L'accéléromètre G1 et le magnétomètre B1 sont orientés suivant la même direction Ox tandis que l'accéléromètre G2 et le magnétomètre B2 sont orientés suivant la même direction Oy, Ox et Oy étant perpendiculaires entre eux dans le plan du disque 2. L'appareil de mesure est complété par un coffret d'électronique 4 qui contient la ou les sources d'alimentation nécessaires pour alimenter les accéléromètres et les magnétomètres. Les valeurs des signaux enregistrés sont traités dans un calculateur numérique lequel peut se trouver dans le coffret 4, ou à distance. Enfin l'appareil est complété par un émetteur de données 5 connecté à une antenne 6 montée au bout du mât 2. Quand le calculateur de traitement est dans le coffret 4, les données émises par 5 proviennent du calculateur. Quand le calculateur est à distance, les données à transmettre sont fournies par les circuits d'enregistrement individuels.

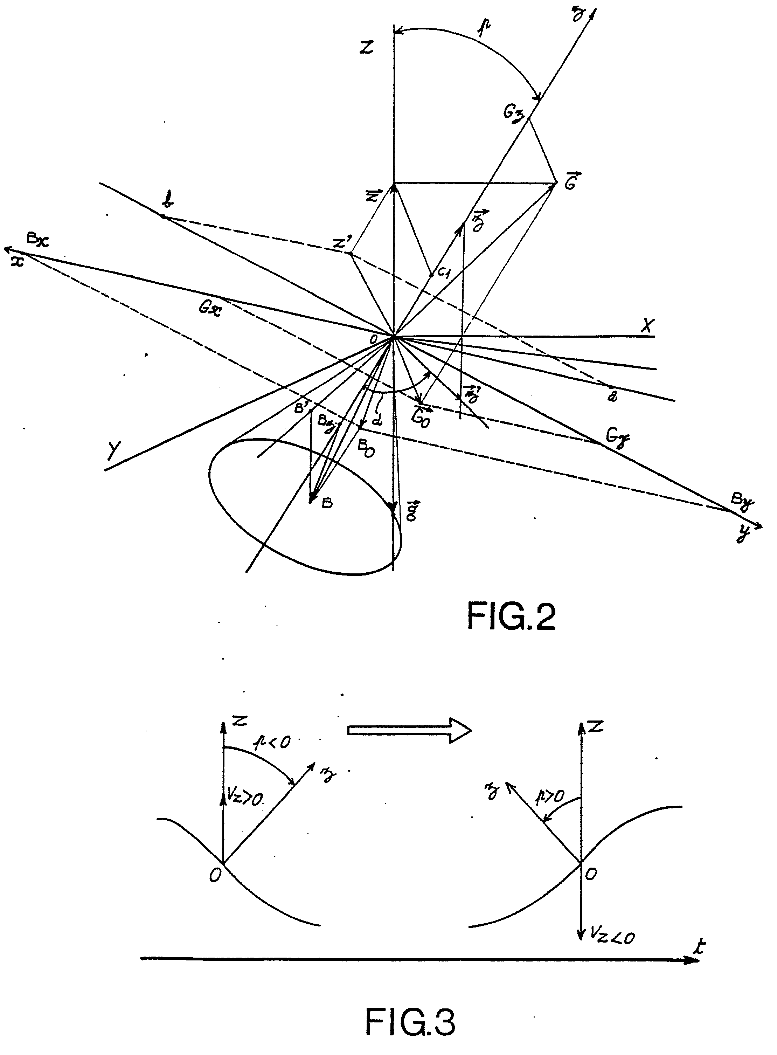

Etant donné que les accéléromètres G1, G2 et G3 sont solidaires de la bouée, les valeurs de mesure qu'ils délivrent sont rapportées au trièdre de référence Ox, Oy, Oz, Fig. 2, qui est essentiellement mobile. Pour transformer les mesures rapportées au trièdre mobile Ox, Oy, Oz en mesures rapportées au trièdre de référence absolu OX, OY, OZ, Fig. 2, où OZ est confondu avec la verticale du lieu de mouillage de la bouée, on utilise comme référence auxiliaire le vecteur champ magnétique B que l'on suppose complètement défini au lieu de mouillage de la bouée et qui est mesuré par les magnétomètres B1, B2, B3 solidaires du trièdre de référence Ox, Oy, Oz.

La bouée disque 1 de la Fig. 1, où la masse du disque 2 est prépondérante par rapport à la somme des masses des autres composants de la bouée, suit le profil de la surface libre de la mer et on verra, dans la suite, comment on tient compte de cette condition.

Dans la suite, on supposera, ce qui est tout à fait vraisemblable, que l'accélération de la surface libre de l'eau, donc du centre O de la bouée, se trouve toujours dans le plan vertical contenant la direction de la ligne de plus grande pente de la surface libre.

Dans la figure géométrique de la Fig. 2, on a indiqué les vecteurs et les angles suivants :
— $\underline{G}$x représentant l'accélération mesurée par G1,
— $\underline{G}$y représentant l'accélération mesurée par G2,
— $\underline{G}$z représentant l'accélération mesurée par G3,
— $\overline{G}$ représentant (Gx + Gy + Gz),
— $\overline{g}$ représentant l'accélération de pesanteur, orientée négativement suivant OZ,
— $\underline{h}$ représentant la différence (G — $\overline{g}$), c'est-à-dire l'accélération de la surface libre au point O,
— $\underline{B}$x représentant la composante du champ magnétique mesurée par B1,
— $\underline{B}$y représentant la composante du champ magnétique mesurée par B2,
— $\underline{B}$z représentant la composante du champ magnétique mesurée par B3,
— $\underline{B}$ représentant la somme (Bx + $\underline{B}$y + Bz), c'est-à-dire le champ magnétique B au point O,
— B' représentant la projection de B sur le plan horizontal OX, OY,
— p représentant l'angle de Oz avec OZ,

3

# 0 106 777

— Oz′ représentant la projection de Oz sur le plan horizontal OX, OY,

— d représentant l'angle de Oz′ avec B′.

Dans les calculs qui vont suivre, on a adopté les conventions de signe suivantes :

— OZ et Oz sont orientés positivement vers le haut, ce qui n'entraîne pas de limitation car la valeur absolue de la pente p est limitée à moins de 90°,

— le plan horizontal OX, OY est orienté dans le sens trigonométrique déduit de l'orientation de OZ, et

— le plan vertical contenant la direction de la houle est orienté par OZ et un axe orienté positivement dans le sens de la houle.

Comme on va le voir dans la suite, la connaissance des vecteurs $\overline{Gx}$, $\overline{Gy}$, $\overline{Gz}$, $\overline{Bx}$, $\overline{By}$, $\overline{Bz}$, $\overline{B}$, $\overline{B}′$ et $\overline{g}$ va permettre de calculer successivement, dans le référentiel Ox, Oy, Oz lié à la bouée :

— $\overline{Z}$ représentant le vecteur unitaire de la verticale ascendante du lieu,

— $V_Z$ représentant la vitesse verticale de la bouée, avec son signe,

— $p_0$ représentant la valeur absolue de la pente de la houle,

— p déjà défini ci-dessus,

— $\overline{z}′$ représentant la projection du vecteur unitaire $\overline{z}$ porté par Oz, sur le plan horizontal OX, OY du lieu,

— $\overline{B}′$ déjà défini ci-dessus,

— $d_0$ représentant la valeur absolue de l'angle de $\overrightarrow{B}′$ et de $\overrightarrow{z}′$, et

— d déjà défini ci-dessus.

On verra notamment qu'en pratique le calcul de $\overline{Z}$ conduit à deux solutions.

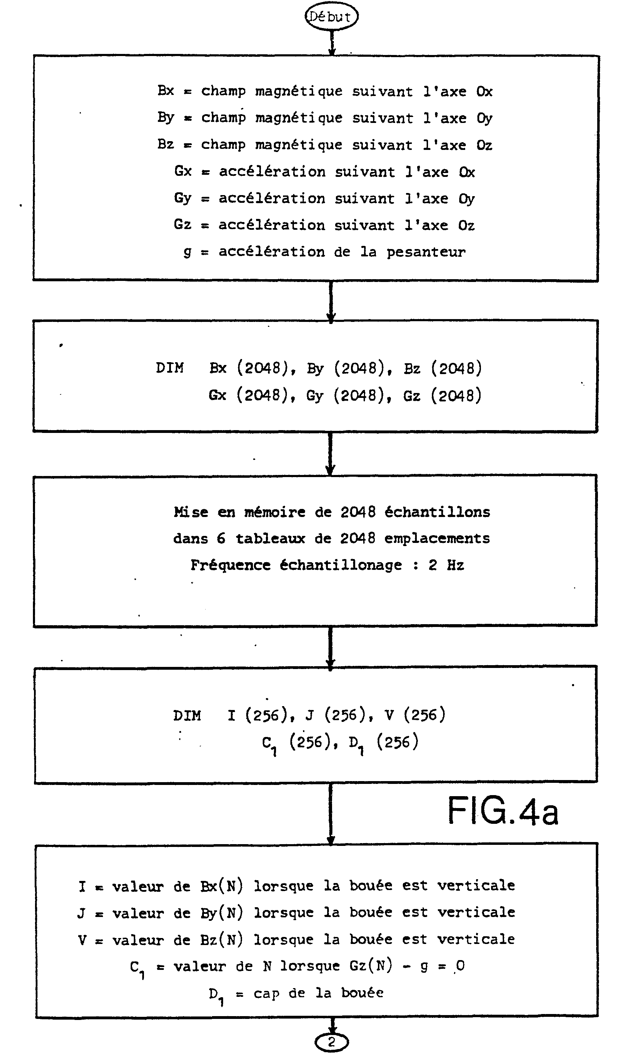

Comme le montre la Fig. 3, illustrant deux états a et b successifs de la bouée, l'état a étant postérieur à l'état b, ce qu'indique implicitement la flèche « sens de la houle » :

1) quand $V_Z > 0$, on a $p < 0$ la bouée montant avant le passage à la crête où $p = 0$,

2) quand $V_Z < 0$, on a $p > 0$ la bouée descendant avant le passage au creux où $p = 0$.

Par ailleurs, la direction de la houle d, c'est-à-dire la direction d'où vient la houle, sera :

1) $d = (\overrightarrow{B}′, \overrightarrow{z}′)$, quand $p > 0$, c'est-à-dire $V_Z < 0$, et

2) $d = (\overrightarrow{B}′, \overrightarrow{z}′) + \pi$, quand $p < 0$, c'est-à-dire $V_Z > 0$.

Si l'on considère le gisement ou cap magnétique, de la direction d'où vient la houle, on prendra :

1) $d = (\overrightarrow{B}′, \overrightarrow{z}′)$, quand $V_Z < 0$, et

2) $d = - (\overrightarrow{B}′, \overrightarrow{z}′) - \pi$, quand $V_Z > 0$,

puisque les gisements sont comptés dans le sens inverse du sens trigonométrique dans le plan horizontal OX, OY.

La connaissance du signe de $V_Z$ permet de lever les indéterminations de signe sur p et de $\pi$ sur d, ces indéterminations étant inévitables puisque la configuration des accéléromètres et des magnétomètres ne privilège pas une direction horizontale.

On va maintenant décrire le calcul des coordonnées a, b, c du vecteur $\overline{Z}$ dans le trièdre Ox, Oy, Oz.

On a les équations suivantes :

$$a^2 + b^2 + c^2 = 1 \tag{1}$$

$$-\overline{Z} \cdot \overline{B}/B = \cos A \text{ puisque } (-\overline{Z}, \overline{B}) = A,$$

A étant l'angle constant de la verticale du lieu et du champ magnétique terrestre et B le module constant du champ magnétique, A et B ne dépendant que du lieu de mouillage.

Par ailleurs, $\overline{Z}$, $\overline{G}$ et $\overline{z}$ étant coplanaire, on a :

$$\overline{Z}(\overline{G} \wedge \overline{z}) = 0.$$

Cette équation développée donne, avec (1) :

$$a^2 + b^2 + c^2 = 1 \tag{1}$$

$$a \cdot Bx + b \cdot Bx + c \cdot Bz = -B \cdot \cos A \tag{2}$$

$$a \cdot Gy - b \cdot Gx = 0 \tag{3}$$

4

d'où

$$a = \lambda \, . \, Gx$$

$$b = \lambda \, . \, Gy \tag{4}$$

$$c = - \frac{B \cdot \cos A}{Bz} - \lambda \cdot \frac{Bx \cdot Gx + By \cdot Gy}{Bz}$$

Le remplacement, dans l'équation (1), de a, b, ç par leurs valeurs du système (4) conduit à l'équation (5) ci-dessous, dont la solution donne le paramètre :

$$0 = \lambda^2 \cdot (Gx^2 + Gy^2) + \frac{Bx \cdot Gx + By \cdot Gy}{Bz}{}^2 + 2\lambda \cdot \frac{B \cdot \cos A(Bx \cdot Gx + By \cdot Gy)}{Bz^2}$$

$$\left(1 - \frac{B^2 \cdot \cos^2 A}{Bz^2}\right) \tag{5}$$

Si l'on appelle :

$$Go = (Gx^2 + Gy^2)^{1/2}$$

$$K = (Bx \, . \, Gx + By \, . \, Gy) \, . \, Bz^{-1}$$

$$L = B \, . \, \cos A \, . \, Bz^{-1}$$

l'équation (5) devient :

$$\lambda^2 (Go^2 + K^2) + 2\lambda LK - (1 - L^2) = 0$$

et l'on a :

$$c = - (L + \lambda K)$$

L'équation (5) en $\lambda$ est donc une équation du second degré qui a deux solutions : $\lambda 1$ et $\lambda 2$, définissant deux vecteurs $\overline{Z1}(a1, \ b1, \ c1)$ et $\overline{Z2}(a2, \ b2, \ c2)$. Cette double solution se comprend géométriquement, car Z est fourni par l'intersection d'un plan, contenant G et $\overline{z}$, et d'un cône d'axe B et d'ouverture A.

On notera que Go, K et L se calculent à partir de mesures faites par G1, G2, B1, B2, B3 et la connaissance de B et A. Donc, les valeurs de $\lambda$ sont bien calculables.

Pour obtenir la valeur de la pente p, on va d'abord calculer la vitesse verticale de la bouée, en affectant les valeurs liées au référenciel défini par la solution $\overline{Z1}$ de l'équation (5).

$$V_{Z1} = \int_0^+ \overrightarrow{\overline{Z}1} \cdot (\overrightarrow{G} - \overrightarrow{g}) \, dt$$

soit :

$$V_{Z1} = \int_0^+ (a1 \cdot Gx + b1 \cdot Gy + c1 \cdot Gz + g) \, dt$$

car $\overline{g}$ est dirigé vers le bas, ou encore ;

$$V_{Z1} = \int_0^+ [\lambda 1 \cdot Gx^2 + \lambda 1 \cdot Gy^2 - (L + \lambda 1 \cdot K) \cdot Gz + g] \, dt$$

ou

$$V_{Z1} = \int_0^+ [\lambda 1 (G0^2 - K \cdot Gz) - L \cdot Gz + g] \, dt \tag{6}$$

L'équation (6) permet de connaître le signe $V_{Z1}$ et, d'autre part, c1 est égal à $- (L + \lambda K)$, donc :

$$p1 = - (\text{signe } V_{Z1}) \ \text{Arc cos c1}$$

On peut remarquer que c1 et c2 sont toujours positifs puisque la pente est, en valeur absolue, inférieure à 90°. De plus, d'après (4) et (1), on a aussi :

$$c1 = (1 - \lambda1^2 . Go^2)^{1/2}$$

Bien entendu, les derniers modes de calcul sur $\lambda1$ sont aussi valables sur $\lambda2$.

On va maintenant calculer la projection $\overrightarrow{z'1}$ de $\overrightarrow{z}$ sur le plan horizontal OX1, OY1, défini par $\overrightarrow{Z1}$. On a :

$$\overrightarrow{z'1} \cdot \overrightarrow{Z1} = 0$$

$$(\overrightarrow{z} - \overrightarrow{z'1}) \wedge Z1 = 0$$

soit, en posant $\overrightarrow{z'1}(\alpha1, \beta1, \gamma1)$,

$$\alpha1 . a1 + \beta1 . b1 + \gamma1 . c1 = 0 \qquad\qquad (8)$$

$$\alpha1 . b1 - a1 . \beta1 = 0$$

$$a1 (\gamma1 - 1) - \alpha1 c1 = 0 \qquad\qquad (9)$$

$$\beta1 c1 - b1(\gamma1 - 1) = 0$$

d'où :

$$\overrightarrow{z'1} \begin{cases} \alpha1 = - a1 \cdot c1 \\ \beta1 = - b1 \cdot c1 \\ \gamma1 = 1 - c1^2 = a1^2 + b1^2 \end{cases}$$

La projection $\overrightarrow{B'1}$ de $\overrightarrow{B}$ sur le plan horizontal défini par $\overrightarrow{z1}$ s'écrit :

$$\overrightarrow{B'1} = \overrightarrow{B} + \overrightarrow{Z1} . B . \cos A$$

car $\overrightarrow{B}$ et $\overrightarrow{Z1}$ sont opposés, soit :

$$\overrightarrow{B'1} \begin{cases} Bx + a1 \cdot B \cdot \cos A \\ By + b1 \cdot B \cdot \cos A \\ Bz + c1 \cdot B \cdot \cos A \end{cases}$$

On va maintenant calculer l'angle orienté B'1, z'1 que l'on définit, par exemple, par son cosinus et le signe de son sinus.

Ici le signe du sinus sera donné par le signe du produit vectoriel B'1 $\wedge$ z'1, suivant l'axe OZ1. On a donc :

$$\cos | B'1, z'1 | =$$

$$= \frac{\alpha1 \cdot (Bx + a1 \cdot B \cdot \cos A) + (\beta1 \cdot (By + b1 \cdot B \cdot \cos A) + \gamma1 \cdot (Bz + c1 \cdot B \cdot \cos A)}{\| \overrightarrow{z'1} \| \ \| \overrightarrow{B'1} \|}$$

avec :

$$\| \overrightarrow{B'1} \| = B \cdot \sin A \qquad \text{et} \qquad \| \overrightarrow{z'1} \| = (a1^2 + b1^2)^{1/2}$$

d'où, tous les calculs faits, compte tenu de (2) :

$$\cos | \overrightarrow{B'1}, \overrightarrow{z'1} | = \frac{Bz + c1 \cdot B \cdot \cos A}{B \cdot \sin A \cdot (1 - c1^2)^{1/2}}$$

Par ailleurs, on a :

signe (B'1 $\wedge \overrightarrow{z'1}$) = signe [$\beta1$(Bx + a1 . B . cos A) $- \alpha1$ . (By + b1 . B . cos A)]

= signe [$\lambda1$ . c1 . (Gx . By $-$ Gy . Bx)]

A noter que le cosinus s'exprime encore simplement sous la forme suivante :

$$\cos (\overrightarrow{B'1}, \overrightarrow{z'1}) = + \frac{Bz + c1 \cdot B \cdot \cos A}{\lambda 1 \cdot G0 \cdot B \cdot \sin A} \qquad \text{si} \qquad \lambda 1 > 0$$

$$\cos (\overrightarrow{B'1}, \overrightarrow{z'1}) = - \frac{Bz + c1 \cdot B \cdot \cos A}{\lambda 1 \cdot G0 \cdot B \cdot \sin A} \qquad \text{si} \qquad \lambda 1 < 0$$

On peut ensuite déduire des calculs ci-dessus la valeur de d, comme on l'a mentionné plus haut.

Il est évidemment nécessaire de choisir, entre les deux solutions offertes par l'équation (5), celle qui donne la vraie verticale du lieu de mouillage. En toute rigueur, il est impossible de la déterminer avec les seuls paramètres mesurés, sans introduire des considérations physiques supplémentaires par une autre mesure, celle du vent, par exemple.

Toutefois, quelques remarques préliminaires permettent de distinguer les deux solutions à partir du paramètre L.

En effet, $L = (B \cdot \cos A) \cdot Bz^{-1}$ est toujours négatif si la pente p de la houle reste inférieure à $(90° - A)$, ce qui correspond au cas d'une mer peu agitée.

De plus, en posant $L = L'$ et si $L' < 1$, on a :

$$\lambda 1 \, \lambda 2 = - \frac{1 - L^2}{G0^2 + K^2} < 0$$

Si $\beta 1 = (\overrightarrow{B'1}, \overrightarrow{z'1})$ correspond à la première solution et $\beta 2 (\overrightarrow{B'2}, \overrightarrow{z'2})$ à la seconde solution, on peut vérifier que l'on a, pour les deux solutions des vitesses verticales $V_z$ de signes opposés et que l'on peut prendre :

$$d1 = - \beta 1 \text{ et}$$

$$d2 = - (\beta 2 + \pi)$$

avec, dans tous les cas, $d1 + d2 = \pi$.

Si $L' > 1$, on a $\lambda 1 \cdot \lambda 2 > 0$, $\lambda 1$ et $\lambda 2$ étant tous deux du signe de K. On peut vérifier que p1 et p2 sont de même signe, ainsi que les vitesses verticales $V_{z1}$ et $V_{z2}$. Par ailleurs, on a :

$$\begin{aligned} d1 &= - \beta 1 \text{ ou} & d1 &= - \beta 1 - \pi \\ d2 &= - \beta 2 = + \beta 1 - \pi & d2 &= - \beta 2 - \pi = \beta 1 \end{aligned}$$

Si, maintenant, on a $\lambda 1 > \lambda 2$, on peut affirmer que, par continuité, si la solution $\lambda i$ est la solution correcte, elle le reste jusqu'à ce que l'équation (5) admette une solution double, ce qui se produit pour :

$$(KL)^2 = - (1 - L^2) \cdot (Go^2 + K^2)$$

Cet état n'est possible que si $L' > 1$.

D'autre part, on sait que la vitesse verticale doit être sensiblement nulle lorsque la bouée est elle-même verticale, c'est-à-dire lorsqu'elle se trouve sur une crête ou dans un creux.

La bouée est donc verticale lorsque la verticale vraie OZi est confondue avec Oz. A cet instant, on a :

$$L = B \cdot \cos A \cdot Bz^{-1} = -1.$$

Réciproquement, quand $L = -1$, on a deux solutions :

$$\lambda i = 0, \text{ et}$$

$$\lambda_j = \frac{2 K}{G0^2 + K^2}$$

$\lambda j$ étant du signe de K. Si $\lambda i$ est la bonne solution, Ozi est bien la verticale du lieu ; si $\lambda j \neq 0$ est la bonne solution, Ozj est la deuxième intersection du cône (B, A) par le plan vertical contenant la direction de la houle.

On voit ainsi qu'au cours d'une vague, le paramètre L peut varier suivant deux allures différentes :

allure n° 1

7

L' > 1, Oz penché vers le secteur SUD,

phase $0_+$ L' = 1, au passage de Oz à la verticale,

L' < 1, pour Oz dans le cône (B, A)

phase $0_-$ L' = 1, au passage de Oz par la verticale dans l'autre sens.

allure n° 2

L' > 1, Oz penché vers le secteur SUD,

phase $0_+$ L' = 1, au passage de Oz à la verticale,

L' < 1, pour Oz dans le cône,

phase $2_+$ L' = 1 au passage de Oz sur OZj « montant »,

L' > 1,

phase $2_-$ L' = 1, au passage de Oz sur OZj en sens inverse,

L' < 1, pour Oz dans le cône,

phase $0_-$ L' = 1, au passage de Oz à la verticale en sens inverse.

L'une ou l'autre allure sera la bonne suivant l'état de la mer et la direction de la houle. La seconde devient de plus en plus probable, même pour des états de mer faibles, lorsque la direction de la houle s'approche de l'EST ou de l'OUEST. Lorsque la houle est d'EST ou d'OUEST, on a évidemment en permanence L' = 1.

Dans les calculs, on distinguera la phase $0_{(\pm)}$ de la phase 2 de la phase $2_{(\pm)}$ par l'intermédiaire de $V_{zj}$. En effet, dans la phase 2, on trouvera pour la valeur $\lambda = 0$, une vitesse $V_{zj} \neq 0$, alors que l'on trouvera $V_{zj} = 0$, si l'on est en phase 0.

On cherchera donc la solution telle que, pour l'instant t0 :

L' = 1, pour t = t0

L' > 1, pour t < t0

L' < 1, pour t > t0

$\lambda i = 0$

$V_{zi} = 0$

La solution correcte pour la période L' < 1 est alors celle qui est attachée au $\lambda i$ ainsi prédéterminé. C'est également la solution à retenir pour la période précédente (L' > 1), sauf si $\Delta = K^2 L^2 + (1 - L^2) . (Go^2 + K^2)$ s'est annulé, en donnant à l'équation (5) une solution double.

Cette procédure est mise en défaut lorsque l'on a simultanément L' = 1 et $\Delta = 0$, mais ces deux égalités entraînent K = 0, ce qui indique que les projections de B et de G sur le plan OXY, qui est à cet instant le plan horizontal sont perpendiculaires, ce qui s'exprime aussi par B' et Go perpendiculaires. La houle est donc d'EST ou d'OUEST et $\lambda 1 = \lambda 2$, tout au long du cycle.

On peut conclure également que l'on n'aura un changement possible de solution à retenir que lorsque la direction instantanée de la houle passera par l'EST ou par l'OUEST. Un test sur le passage de L' par la valeur 1 permettra alors de dégager la solution correcte pour la période suivant un passage de $\Delta$ par zéro.

Avant de décrire un organigramme de calcul permettant d'effectuer les déterminations de p et d en partant des considérations et équations ci-dessus, on va énoncer les simplifications que l'on peut faire dans ces équations en supposant que le vecteur accélération $\overline{h}$ est normal à la surface libre. Cette hypothèse est fondée sur la théorie qui énonce que puisque le profil de la surface libre est une isobare et que la vitesse y est tangente en tout point à la surface libre, l'accélération $\overline{h} = \overline{dV}/dt$ est, suivant Bernouilli, normale à ce profil de surface libre.

Dans ce cas, on mesure, à chaque instant :

$$\overline{G} = \overline{g} + \overline{h} = - g . \overline{Z} + h . \overline{z,}$$

$$Gx = - ag$$

soit

$$Gy = - bg$$

$$Gz = - cg +$$

Il est immédiat que ceci entraîne une solution et une seule pour a, b et c. Elle correspond à la solution $\lambda = - 1/g$.

La pente de la houle peut être estimée avec les seules indications des accéléromètres, puisque :

$$c = + 1 - \sqrt{(a^2 + b^2)} = \sqrt{1 - \frac{Gx^2 + Gy^2}{g^2}}$$

$$V_{Z(t)} = \int_0^+ \vec{h} \cdot \vec{Z} \cdot dt = \int_0^+ c \cdot (Gz + cg) \cdot dt$$

soit

$$p(t) = - (\text{signe de } V_{Z(t)}) \text{ Arc cos } c$$

ou

$$p(t) = - (\text{signe de } V_{Z(t)}) \text{ Arc sin } (Gx^2 + Gy^2)^{1/2}/g$$

La direction de la houle est alors donnée, dans l'intervalle $(-\pi, +\pi)$, par :

$$\cos d = - g \frac{Bz + c \cdot B \cdot \cos A}{G0 \cdot B \cdot \sin A} \qquad \text{si} \qquad V_z > 0$$

$$\cos d = + g \frac{Bz + c \cdot B \cdot \cos A}{G0 \cdot B \cdot \sin A} \qquad \text{si} \qquad V_z < 0$$

si $V_z < 0$

avec signe de $d =$ signe de $(Gy \cdot Bx - Gx \cdot By)$

Il est intéressant de noter qu'avec cette hypothèse simplificatrice, les calculs ne font plus appel à Bx et By, c'est-à-dire les composantes de B dans un plan perpendiculaire à l'axe de la bouée. Si les valeurs Bx et By sont mesurées, on peut donc faire un test sur la validité de l'hypothèse simplificatrice. De l'équation (4) ci-dessus, on tire que Bx et By doivent vérifier la relation suivante :

$$Bx \cdot Gx + By \cdot Gy = g \cdot \left( B \cdot \cos A + Bz \cdot \sqrt{1 - \frac{Gx^2 + Gy^2}{g^2}} \right)$$

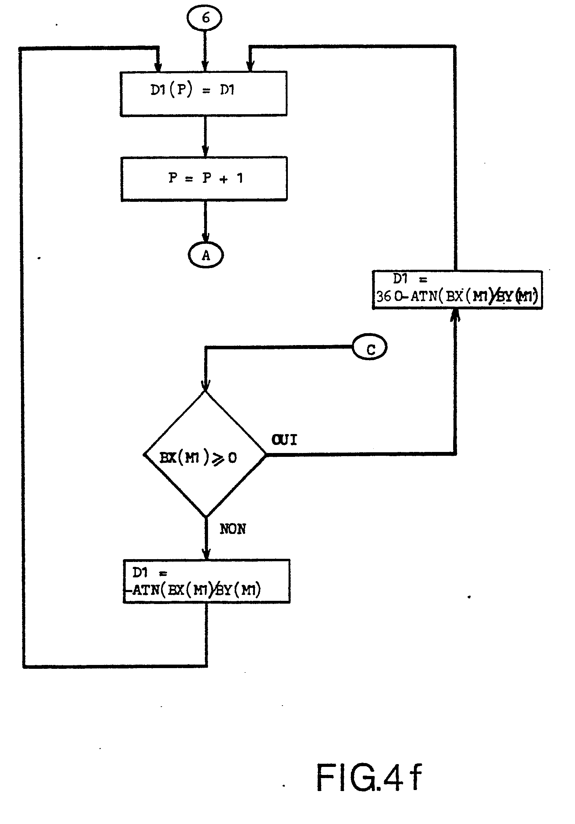

A la Fig. 4a, on a indiqué que les mesures effectuées par les accéléromètres et les magnétomètres sont échantillonnées, au rythme de 2 Hz, de manière à obtenir pour chacune des valeurs mesurées 2 048 échantillons consécutifs qui sont mémorisés à chaque phase de mesure. La phase de mesure correspond donc à l'enregistrement des paramètres de la houle pendant environ 20 minutes.

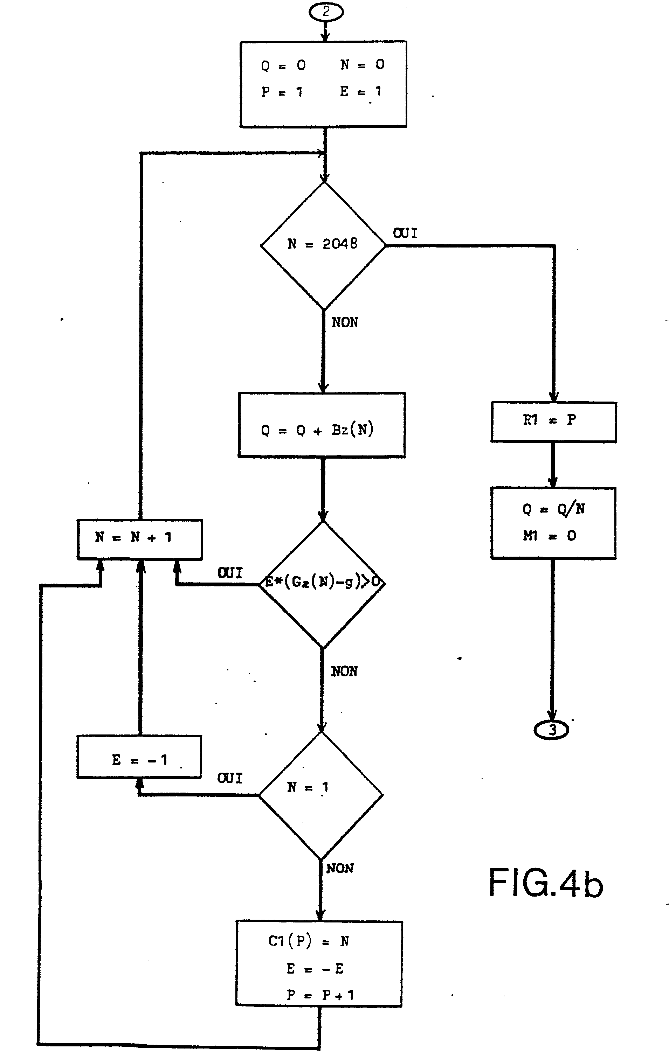

L'organigramme de la Fig. 4b indique comment de la différence entre la projection de l'accélération G subie par la bouée et la pesanteur, on en déduit les rangs N des échantillons mémorisés pour lesquels la bouée est sur une crête ou au fond d'un creux. R1 donne le nombre des crêtes et des creux de houle pendant les 20 minutes d'enregistrement et Q est égal à la moyenne de la projection verticale du champ magnétique.

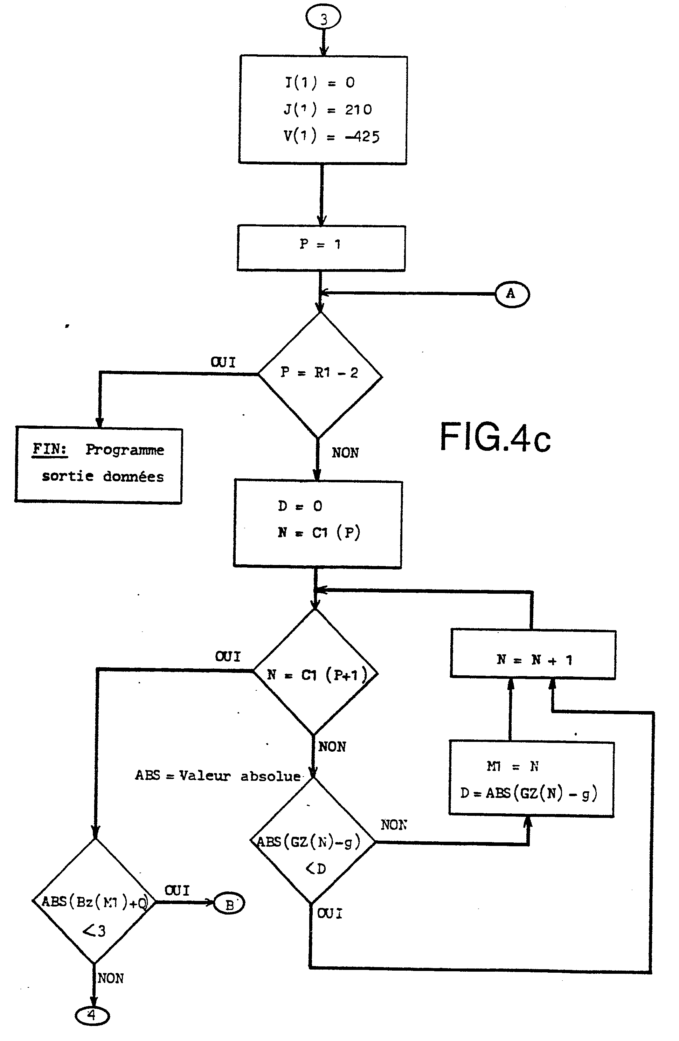

A la Fig. 4c, l'organigramme permet, avec un certain degré d'incertitude, quand l'accélération verticale est nulle, avec la projection verticale du champ magnétique sur l'axe de la bouée égale à la projection de ce champ sur la verticale, ce qui implique la verticalité de la bouée.

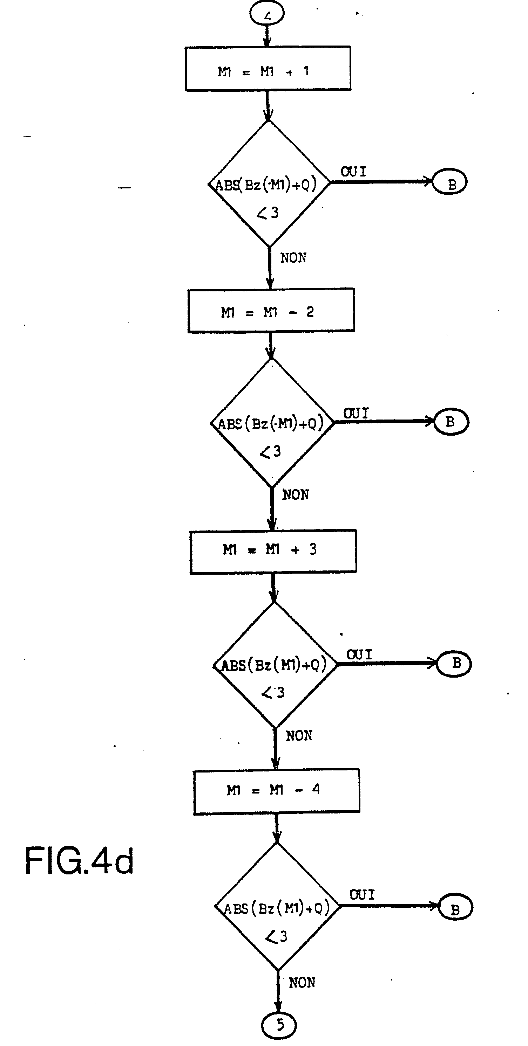

A la Fig. 4d, on étudie comment varie la différence entre ces projections autour d'un point haut ou bas.

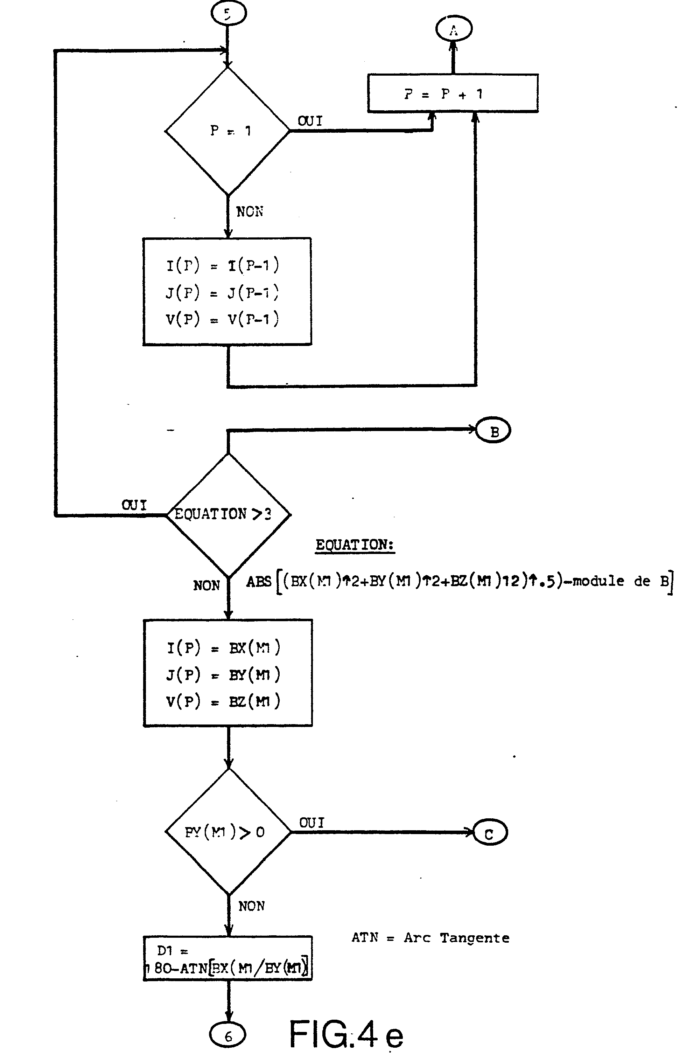

Aux Fig. 4e et 4f, on détermine, en levant l'incertitude de 180°, l'angle correspondant à la tangente définie par les projections du champ magnétique sur les axes Ox et Oy de la bouée qui, sur une crête ou dans un creux, sont également horizontaux.

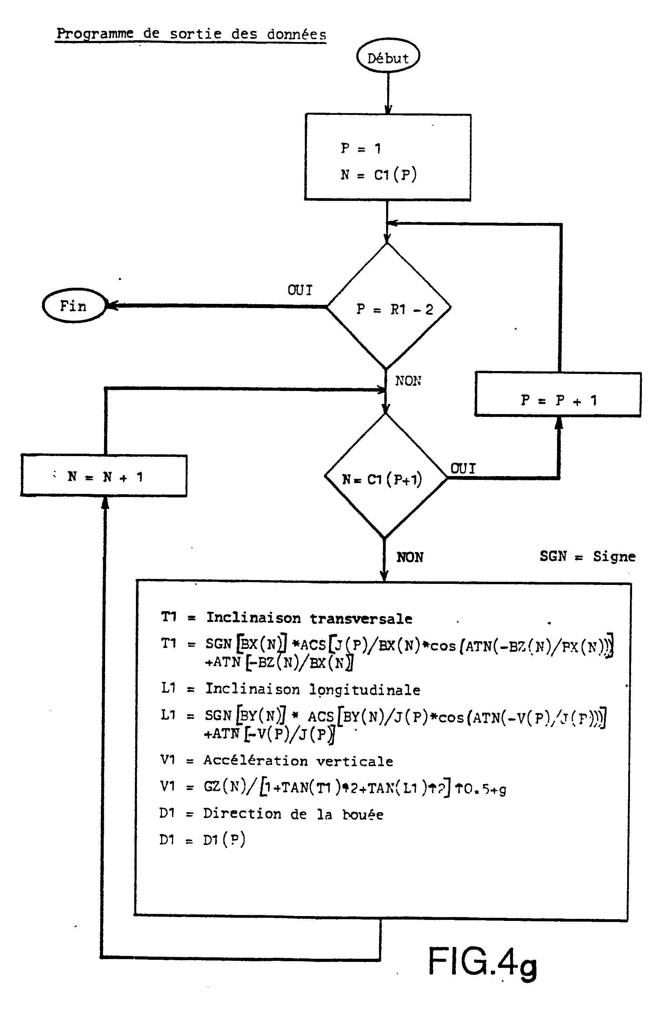

A la Fig. 4g, on a défini les données de sortie, soit T1 et L1 qui forment les composantes de la pente, V1 qui correspond à l'accélération verticale $V_z$ et la direction D1 correspondant à d. A noter que l'on utilise les variables intermédiaires I, J et V qui sont définies à la Fig. 4a.

Enfin, on notera que la bouée 1 est évidemment mouillée, ce qu'indique l'orin 7. L'orientation de la bouée est stabilisée par une ancre flottante 8.

**Revendications**

1. Appareil comportant des accéléromètres destiné aux mesures de caractéristiques de la houle en mer comprenant une bouée (1), caractérisé en ce qu'une section plane de la bouée reste parallèle à la surface libre de l'eau, l'appareil comprenant des moyens de mesure montés sur la bouée (1) qui comportent un accéléromètre (G3) dirigé selon l'axe de la bouée perpendiculaire à ladite section plane, deux accéléromètres orthogonaux (G1, G2) montés dans ladite section plane (Ox, Oy) de la bouée, et un magnétomètre triaxial (B1, B2, B3), les axes du magnétomètre triaxial étant confondus avec ceux des accéléromètres, les valeurs obtenues par lesdits moyens de mesure donnant les caractéristiques de la houle telles que l'accélération verticale, la pente de la surface libre de l'eau et la direction de la houle.

2. Appareil suivant la revendication 1, caractérisé en ce que, le vecteur accélération $(\overline{h})$ dû à la houle étant normale à la surface libre de l'eau, l'accéléromètre (G3) monté selon l'axe (Oz) de la bouée (1) est tel qu'il mesure la somme de la valeur de l'accélération (h) due à la houle et la projection de l'accélération de la pesanteur $\overline{g}$ selon l'axe de la bouée, et les deux accéléromètres orthogonaux (G1, G2) montés dans la section plane (Ox, Oy) de la bouée (1) sont tels qu'ils mesurent les composantes de la projection du vecteur $\overline{g}$ dans la section plane de la bouée, et en ce que l'appareil comporte des moyens de calcul qui déduisent de la valeur de $\overline{g}$ et des valeurs des composantes de $\overline{g}$ dans la section plane de la bouée, la projection du vecteur $\overline{g}$ selon l'axe (Oz) de la bouée, puis après soustraction de cette valeur de la valeur mesurée par le premier accéléromètre (G3), qui délivrent la valeur de l'accélération (h) due à la houle.

3. Appareil suivant la revendication 2, caractérisé en ce que lesdits moyens de calcul déduisent de la valeur de la projection du vecteur $\overline{g}$ selon l'axe (Oz) de la bouée, l'inclinaison (p) de cet axe par rapport à la verticale (OZ), ce qui donne directement la pente de la surface libre de l'eau.

4. Appareil suivant la revendication 3, caractérisé en ce que lesdits moyens de calcul déduisent de la valeur de l'accélération (h) due à la houle et de son inclinaison (p) par rapport à la verticale, l'accélération verticale due à la houle.

5. Appareil suivant la revendication 3, caractérisé en ce que lesdits moyens de calcul déduisent des mesures des accéléromètres (G1, G2 et G3), la projection du vecteur accélération due à la houle sur le plan horizontal (OX, OY), et des mesures des magnétomètres (B1, B2, B3), la projection du vecteur champ magnétique (B) sur le plan horizontal (OX, OY), l'angle de ces projections donnant la direction de la houle.

6. Appareil suivant l'une des revendications 1 à 5, caractérisé en ce que le corps de la bouée (1) se compose essentiellement d'un disque plat (2), dont son plan correspond à ladite section plane.

## Claims

1. An apparatus having accelerometers for measuring sea swell characteristics, comprising a buoy (1), characterized in that a plane section of the buoy (1) keeps parallel to the free water surface, the apparatus having measuring means mounted on the buoy (1) which comprise an accelerometer (G3) directed along the buoy axis that is normal to said plane section, two orthogonal accelerometers (G1, G2) mounted in said plane section (Ox, Oy) of the buoy, and a triaxial magnetometer (B1, B2, B3) the axes of which are confounded with accelerometer axes, the values obtained by said measuring means providing the swell characteristics such as vertical acceleration, slope of the free water surface and swell direction.

2. An apparatus according to claim 1, characterized in that, the acceleration vector (h) resulting from the swell being normal to the free water surface, the accelerometer (G3) mounted along the axis (Oz) of the buoy (1) is so provided that it measures the sum of the value of the acceleration (h) resulting from the swell and the projection of gravity acceleration (g) along the axis of the buoy, and the two orthogonal accelerometers (G1, G2) mounted in the plane section (Ox, Oy) of the buoy are so provided that they measure the components of the projection of vector (g) in the plane section of the buoy, and in that the apparatus comprises processor means which derive from the value of (g) and the values of the components of (g) in the plane section of the buoy the projection of the vector (g) along the buoy axis (Oz) then, after substracting this value from the value measured by the first accelerometer (G3), deliver the value of the acceleration resulting from the swell.

3. An apparatus according to claim 2, characterized in that said processor means derive from the value of the projection of vector (g) along the buoy axis (Oz) the slope (p) of that axis relative to the vertical direction (Oz), which directly provides the slope of the free water surface.

4. An apparatus according to claim 3, characterized in that said processor means derive from the value of acceleration (h) resulting from the swell and from the slope (p) thereof relative to the vertical direction, the vertical acceleration resulting from the swell.

5. An apparatus according to claim 3, characterized in that said processor means derive from the measures of the accelerometers (G1, G2 and G3) the projection of acceleration vector resulting from the swell in the horizontal plane (Ox, Oy), and from the measures of the magnetometers (B1, B2, B3) the projection of the magnetic field vector (B) in the horizontal plane (Ox, Oy), the angle between said projections giving the direction of the swell.

6. An apparatus according to anyone of claims 1-5, characterized in that the body of the buoy (1) typically is a flat disc (2) the plane of which corresponds to said plane section.

## Patentansprüche

**0 106 777**

1. Gerät zur Messung von Eigenschaften der Meeresdünung mit Beschleunigungsmessern und einer Boje (1), dadurch gekennzeichnet, daß ein ebener Schnitt der Boje (1) parallel zur freien Wasserfläche liegt, daß das Gerät Meßeinrichtungen hat, die auf der Boje (1) montiert sind, welche einen Beschleunigungsmesser (G3) umfassen, der längs der Bojenachse, d. h. normal zu dieser Schnittebene, ausgerichtet ist, ferner zwei orthogonale Beschleunigungsmesser (G1, G2), die in dieser Schnittebene (Ox, Oy) der Boje montiert sind, sowie ein triaxiales Magnetometer (B1, B2, B3), dessen Achsen mit den Achsen der Beschleunigungsmesser zusammenfallen, und daß die durch die Meßeinrichtungen erhaltenen Werte die Eigenschaften der Dünung darstellen, z. B. vertikale Beschleunigung, Neigung der freien Wasseroberfläche und Richtung der Dünung.

2. Gerät nach Anspruch 1, dadurch gekennzeichnet, daß der Beschleunigungsvektor (h) aus der Dünung resultiert, die normal zur freien Wasseroberfläche liegt, daß der Beschleunigungsmesser (G3), der längs der Achse (Oz) der Boje (1) montiert ist, die Summe der Beschleunigungswerte (h) mißt, die aus der Dünung und der Projektion der Gravitationsbeschleunigung (g) längs der Achse der Boje resultieren, daß die beiden orthogonalen Beschleunigungsmesser (G1, G2), die in der Schnittebene (Ox, Oy) der Boje montiert sind, die Komponenten der Projektion des Vektors (g) in der Schnittebene der Boje messen, und daß das Gerät einen Prozessor aufweist, der von dem Wert von (g) und den Werten der Komponenten von (g) in der Schnittebene der Boje die Projektion des Vektors (g) längs der Bojenachse (Oz) ableitet und dann nach Subtrahierung dieses Wertes von dem Wert, der von dem ersten Beschleunigungsmesser (G3) gemessen wurde, den Wert der Beschleunigung, der aus der Dünung resultiert, angibt.

3. Gerät nach Anspruch 2, dadurch gekennzeichnet, daß der Prozessor von dem Wert der Projektion des Vektors (g) längs der Bojenachse (Oz) die Neigung (p) dieser Achse relativ zur vertikalen Richtung (Oz) ableitet, welche direkt die Neigung der freien Wasseroberfläche angibt.

4. Gerät nach Anspruch 3, dadurch gekennzeichnet, daß der Prozessor von dem Wert der Beschleunigung (h), die aus der Dünung resultiert, und von deren Neigung (p) relativ zur Vertikalrichtung die aus der Dünung resultierende vertikale Beschleunigung ableitet.

5. Gerät nach Anspruch 3, dadurch gekennzeichnet, daß der Prozessor aus den Messungen der Beschleunigungsmesser (G1, G2 und G3) die Projektion des Beschleunigungsvektors, der aus der Dünung in der horizontalen Ebene (Ox, Oy) resultiert, ableitet und aus den Messungen der Magnetometer (B1, B2, B3) die Projektion des magnetischen Feldvektors (B) in der horizontalen Ebene (Ox, Oy) ableitet, wobei der Winkel zwischen diesen Projektionen die Richtung der Dünung angibt.

6. Gerät nach einem der Ansprüche 1-5, dadurch gekennzeichnet, daß der Körper der Boje (1) eine flache Scheibe (2) ist, deren Ebene dieser Schnittebene entspricht.

FIG.1

FIG.2

FIG.3

**0 106 777**

(Début)

Bx = champ magnétique suivant l'axe Ox

By = champ magnétique suivant l'axe Oy

Bz = champ magnétique suivant l'axe Oz

Gx = accélération suivant l'axe Ox

Gy = accélération suivant l'axe Oy

Gz = accélération suivant l'axe Oz

g = accélération de la pesanteur

---

DIM   Bx (2048), By (2048), Bz (2048)

Gx (2048), Gy (2048), Gz (2048)

---

Mise en mémoire de 2048 échantillons

dans 6 tableaux de 2048 emplacements

Fréquence échantillonage : 2 Hz

---

DIM   I (256), J (256), V (256)

$C_1$ (256), $D_1$ (256)

## FIG.4a

---

I = valeur de Bx(N) lorsque la bouée est verticale

J = valeur de By(N) lorsque la bouée est verticale

V = valeur de Bz(N) lorsque la bouée est verticale

$C_1$ = valeur de N lorsque Gz(N) - g = 0

$D_1$ = cap de la bouée

(2)

3

**0 106 777**

FIG.4b

FIG.4c

**0 106 777**

```
                    ( 4 )
                      │
                      ▼
            ┌──────────────────┐
            │   M1 = M1 + 1    │
            └──────────────────┘
                      │
                      ▼
                   ╱     ╲        OUI
                  ╱ ABS(Bz ╲─────────────▶ ( B )
                  ╲ (·M1)+Q ╱
                   ╲  < 3  ╱
                    ╲     ╱
                      │ NON
                      ▼
            ┌──────────────────┐
            │   M1 = M1 - 2    │
            └──────────────────┘
                      │
                      ▼
                   ╱     ╲        OUI
                  ╱ ABS(Bz ╲─────────────▶ ( B )
                  ╲ (·M1)+Q ╱
                   ╲  < 3  ╱
                    ╲     ╱
                      │ NON
                      ▼
            ┌──────────────────┐
            │   M1 = M1 + 3    │
            └──────────────────┘
                      │
                      ▼
                   ╱     ╲        OUI
                  ╱ ABS(Bz ╲─────────────▶ ( B )
                  ╲ (M1)+Q ╱
                   ╲  < 3  ╱
                    ╲     ╱
                      │ NON
                      ▼
            ┌──────────────────┐
            │   M1 = M1 - 4    │
            └──────────────────┘
                      │
                      ▼
                   ╱     ╲        OUI
                  ╱ ABS(Bz ╲─────────────▶ ( B )
                  ╲ (M1)+Q ╱
                   ╲  < 3  ╱
                    ╲     ╱
                      │ NON
                      ▼
                    ( 5 )
```

# FIG.4d

FIG.4 e

EQUATION:

ABS $\left[(BX(M1)\uparrow 2+BY(M1)\uparrow 2+BZ(M1)12)\uparrow .5)-\text{module de B}\right]$

ATN = Arc Tangente

FIG.4 f

Programme de sortie des données

T1 = Inclinaison transversale

$T1 = SGN[BX(N)] *ACS[J(P)/BX(N)*\cos(ATN(-BZ(N)/PX(N)))] +ATN[-BZ(N)/BX(N)]$

L1 = Inclinaison longitudinale

$L1 = SGN[BY(N)] * ACS[BY(N)/J(P)*\cos(ATN(-V(P)/J(P)))] +ATN[-V(P)/J(P)]$

V1 = Accélération verticale

$V1 = GZ(N)/[1+TAN(T1)*2+TAN(L1)*2]*0.5+g$

D1 = Direction de la bouée

$D1 = D1(P)$

SGN = Signe

## FIG.4g